## Europäisches Patentamt
## European Patent Office
## Office européen des brevets

(19)

(11) Veröffentlichungsnummer: **0 280 849 B1**

(12) # EUROPÄISCHE PATENTSCHRIFT

(45) Veröffentlichungstag der Patentschrift: **04.09.91**

(51) Int. Cl.⁵: **G06F 15/36**

(21) Anmeldenummer: **88100569.8**

(22) Anmeldetag: **16.01.88**

(54) **Verfahren und Vorrichtung zum Bestimmen von Schwellenwerten bei der Teilchenanalyse einer Flüssigkeit.**

(30) Priorität: **05.02.87 CH 411/87**

(43) Veröffentlichungstag der Anmeldung:
**07.09.88 Patentblatt 88/36**

(45) Bekanntmachung des Hinweises auf die Patenterteilung:
**04.09.91 Patentblatt 91/36**

(84) Benannte Vertragsstaaten:
**AT BE CH DE FR GB IT LI NL SE**

(56) Entgegenhaltungen:
**EP-A- 0 012 418**

**COMPUTER GRAPHICS AND IMAGE PROCESSING, Band 7, Nr. 2, April 1978, Seiten 259-265, Academic Press, Inc., New York, US; J.S. WESZKA: "A survey of threshold selection techniques"**

(73) Patentinhaber: **Oerlikon-Contraves AG
Schaffhauserstrasse 580
CH-8052 Zürich(CH)**

(72) Erfinder: **Lorenz, Adrian, Dr.
Attenhoferstrasse 36
CH-8032 Zürich(CH)**

## Beschreibung

Die Erfindung betrifft ein Verfahren und eine im wesentlichen einen ersten Speicher sowie einen ersten und zweiten Rechnerteil umfassende Vorrichtung zum Bestimmen von Schwellenwerten bei der Teilchenanalyse einer Flüssigkeitsprobe, insbesondere einer Blutprobenflüssigkeit, auf Grundlage ermittelter und zu einem Histogramm geordneter Messwerte, wobei das Histogramm mindestens zwei - im wesentlichen aus Maxima und Minima gebildete - Populationen aufweist, wovon mindestens ein Minimum adaptiv ermittelbar ist.

Bei der Teilchenanalyse eines Flüssigkeitsgemisches, insbesondere einer Blutprobenflüssigkeit, welche Flüssigkeit Teilchen verschiedener Spezies beziehungsweise Klassen mit verschiedenen oder vergleichbaren Grössen mit entsprechender Verteilungsdichte aufweist, ist eine Trennung sich überlappender Verteilungen der einzelnen Spezies (Populationen) mittels sogenannter Trennschwellen erforderlich.

Die Kriterien zum Setzen von Trennschwellen in durch Messung erfassten Verteilungen sind mannigfaltig. Dabei kann man grundsätzlich zwischen gemäss entsprechenden Kriterien fix gesetzten Trennschwellen und den Populationen des Histogramms "nachlaufenden" adaptiven Trennschwellen unterscheiden. Die vorliegende Erfindung ist für beide Arten von Trennschwellen bzw. deren Bestimmung und Ausnützung brauchbar; die interessanteste Anwendung ist jedoch diejenige im Zusammenhang mit adaptiven Schwellen.

Aus der EP-A 0 012 418 ist zur Analyse einer entsprechend vorbereiteten und beispielsweise Erythrozyten enthaltenden Blutprobenflüssigkeit eine Vorrichtung bekannt, mit der - unter Verwendung geeigneter Mittel und in verschiedenen Schritten bei der Analyse von Teilchen mit bimodaler Verteilung der Teilchengrösse - ein selbsttätiges (adaptives) Aufsuchen des Schwellenwertes (Minimum) in einem Histogramm zur Unterscheidung zwischen den einander überlappenden Grössenverteilungen erreicht wird.

Multimodale Verteilungen mit überlappenden Populationen zeigen verschieden stark ausgeprägte Maxima und Minima, wobei letztere praktisch ohne Ausnahme als Kriterium zur Trennung zwischen zwei sich überlappenden Populationen dienen. Die Maxima werden in der Regel nicht als Trennkriterien gebraucht. Oft sind aber die gesuchten Minima nicht genügend ausgebildet, und das Auffinden einer brauchbaren Trennschwelle scheitert allein an diesem Umstand.

So besteht beispielsweise bei Blutprobenflüssigkeiten mit relativ geringen Lymphozytenkonzentrationen das Problem, dass die gesuchten Minima oftmals nicht ausreichend genug ausgeprägt sind und dadurch das Auffinden (Setzen) einer verwendbaren Trennschwelle nicht gewährleistet ist.

Der Erfindung liegt somit die Aufgabe zugrunde, ein Verfahren und eine Vorrichtung zur Durchführung des Verfahrens anzugeben, mittels welchem/welcher das Bestimmen von Trennschwellen beim Vorliegen von nicht ausreichend genug ausgeprägten Minima ermöglicht wird.

Die Lösung geht von einer interessanten Beobachtung bezüglich der Eigenschaft der Histogramme multimodaler Verteilungen bei der Teilchenanalyse von Blutzellenbestimmungen aus, welche sich in zahlreichen Versuchen bestätigt hat:

Der Quotient Q aus der Differenz zwischen einer Minimalstelle x und einer ausgeprägten Minimalstelle j zur Differenz zwischen einer Maximalstelle k und der nämlichen Minimalstelle j ist, unabhängig von der Art der Aufbereitung der Probe zur Blutzellenanalyse, nahezu konstant.

In Kenntnis von Q für eine bestimmte Probenserie ist es somit möglich, aus je einer ausgezeichneten Minimal- und Maximalstelle eine aus dem Histogramm nicht exakt genug zu erfassende Minimalstelle, die Problemschwelle S, zu berechnen. Wenn also beispielsweise eine Mischverteilung von drei Zellpopulationen weisser Blutkörperchen auf verschiedene Weise chemisch aufbereitet wird, so ändern sich die Volumina der drei Populationen und auch die Lagen der Trennschwellen, was aber nahezu invariant bleibt, ist das Verhältnis der Maxima und Minima zueinander. Die Idee aus dieser Beobachtung war, diese "Gesetzmässigkeit" dort auszunützen, wo bekannte Trennschwellen-Bestimmungsverfahren mit ihren Kriterien versagen. Mit "versagen" ist gemeint, dass bekannte Bestimmungsmethoden wohl einige, aber nicht alle Trennschwellen erfassen. An dieser Stelle greift die Erfindung als komplementäres Verfahren ein und hebt die bekannten Verfahren über diesen Mangel hinweg. Damit werden übliche Verfahren leistungsfähiger.

Das erfindungsgemässe Verfahren ist gekennzeichnet durch folgende Schritte:

a) Berechnung mindestens eines Differenzenquotienten für jedes Histogramm unter Verwendung entsprechender Minima und Maxima;

b) Ordnen, Abspeichern und Bilden von Mittelwerten des/der auf bestimmte Problemschwellen bezogenen Differenzenquotienten;

c) Auswahl des/der Differenzenquotienten für die festzulegende Problemschwelle;

d) Prüfen auf Vorliegen des/der Differenzenquotienten und bei Nichtvorliegen des/der Differenzenquotienten Speicherung des Histogramms;

e) Berechnung der Problemschwellen auf Grundlage der Minima und Maxima sowie der berechneten Differenzenquotienten und Prüfung der berechneten Problemschwellen auf Randbedingungen sowie Verwendung der einzelnen Problemschwellen zur Parameterberechnung;

f) Speicherung der Histogramme, für die kein Differenzenquotient berechnet werden konnte; und

g) Ermittlung nicht unterteilbarer Histogramme mit Problemschwellen und Anweisung an einen Benutzer oder an ein entsprechend ausgebildetes Gerät.

Die erfindungsgemässe Vorrichtung zur Durchführung des Verfahrens ist dadurch gekennzeichnet, dass die Vorrichtung gemäss dem Oberbegriff weiterhin folgende Teile umfasst:

- einen dritten Rechnerteil mit Mitteln für die Berechnung eines einzelnen oder einer Reihe von Differenzenquotienten, ferner mit Mitteln für die Auswahl von Differenzenquotienten für eine festzulegende Problemschwelle und weiterhin mit Mitteln zur Prüfung auf Vorliegen von Differenzenquotienten und Speicherung des Histogramms, sofern kein Differenzenquotient vorhanden ist;
- einen zweiten Speicher, benutzt für das Ordnen, Abspeichern und Bilden von Mittelwerten von auf bestimmte Problemschwellen bezogenen Differenzenquotienten;
- einen vierten Rechnerteil mit Mitteln für die Berechnung einer einzelnen oder einer Reihe von Problemschwellen, ferner mit Mitteln für die Prüfung berechneter, zur Parameterberechnung erforderlicher Problemschwellen auf Randbedingungen;
- einen dritten Speicher mit Mitteln für die Speicherung von Histogrammen, für die kein Differenzenquotient vorliegt, und weiteren Mitteln für die Verwendung zu einem späteren Zeitpunkt, nachdem eine entsprechende Schrittschleife durchlaufen ist.

Weitere Merkmale ergeben sich aus der folgenden Beschreibung in Verbindung mit der Zeichnung und den weiteren Patentansprüchen.

Die Erfindung wird nachstehend in Verbindung mit der Zeichnung beschrieben. Es zeigt:

Fig. 1    ein als Blockschaltbild dargestelltes Ausführungsbeispiel einer Vorrichtung zu einem Teilchenanalysator;

Fig. 2    ein erstes Histogramm, für eine allgemeine Teilchenanalyse;

Fig. 3    ein zweites Histogramm, für eine Blutkörperchenanalyse;

Fig 4    ein drittes Histogramm, für die Blutkörperchenanalyse;

Fig. 5    ein viertes Histogramm, für die Blutkörperchenanalyse.

Für die Analyse einer Flüssigkeit, beispielsweise einer entsprechend vorbereiteten Blutprobenflüssigkeit, wird diese in an sich bekannter Weise durch eine Detektierzone (nicht dargestellt) geleitet und mittels entsprechender elektrischer und/oder optischer Elemente detektiert. Bei diesem Vorgang werden von den in der Flüssigkeit suspendierten und von der Abtastzone abgetasteten Teilchen entsprechende Impulse oder Signale unterschiedlicher Eigenschaften erzeugt und von geeigneten Mitteln gespeichert. Aus diesen gespeicherten Zählimpulsen (Signalen) werden anschliessend die zur Auswertung erforderlichen Zellvolumen-Histogramme mit den einzelnen Parametern ermittelt.

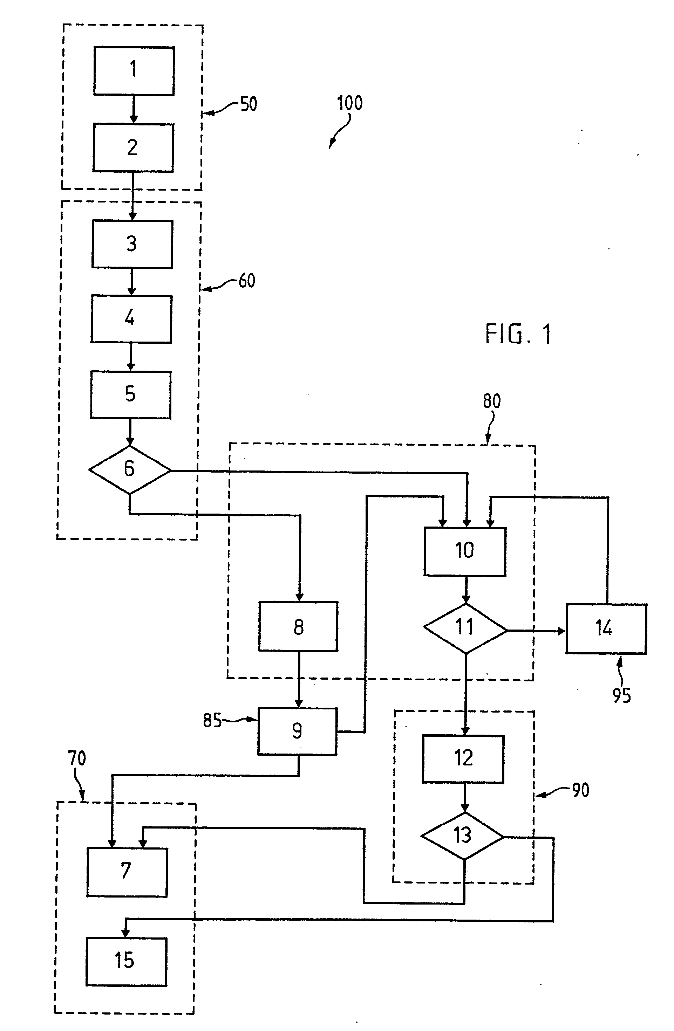

In Fig. 1 ist mit 100 eine als Blockschaltbild dargestellte Einrichtung zu einem nicht näher dargestellten Teilchenanalysatorgerät, insbesondere zu einem Analysatorgerät für die Blutkörperchenanalyse, bezeichnet. Die Vorrichtung 100 umfasst im wesentlichen einen ersten Speicher 50, einen zweiten Speicher 85 sowie einen dritten Speicher 95 und weiterhin einen ersten Rechnerteil 60, einen zweiten Rechnerteil, einen dritten Rechnerteil 80 sowie einen vierten Rechnerteil 90. Im ersten Speicher 50 und den beiden Rechnern 60 und 70 sind an sich bekannte, mit 1,2,3,4,5,6 und 7 bezeichnete und für die eigentliche Teilchenanalyse erforderliche Verfahrensschritte angegeben, welche zum besseren Verständnis der vorliegenden Erfindung im einzelnen nochmals aufgeführt werden.

Die an sich bekannten Verfahrensschritte laufen in nachstehend beschriebener Weise und Reihenfolge ab:

Schritt 1 im Speicher 50 "Organisation",

- Abschätzen des Grössenbereiches der erwarteten Partikelverteilung;
- Definieren der diskreten Schrittgrösse;
- Definieren der zu verwendenden Anzahl Speicherkanäle;
- Zuordnung einer absoluten Teilchengrösse zu jedem Speicherkanal (Diskriminierung nach Partikelvolumen, z.B. in aufsteigender Reihenfolge);
- Definieren der Entscheidungskriterien (z.B. relative Minima, Inkrementierung und andere mehr);

Schritt 2 im Speicher 50 "Signalspeicherung",

3

- Echtzeiterfassung;
- Digitalisierung der von einem Fühlelement (nicht dargestellt) abgegebenen Signale;
- Zuordnung der Digitalwerte zu den entsprechend indizierten Speicherkanälen;
- Bestimmung der Speicherkanaladresse, so dass diese dem digitalisierten Teilchensignal entspricht,

Schritt 3 im ersten Rechnerteil 60 "Aufbereitung der Signalmenge",

- Minderung der bei der Digitalisierung entstehenden Quantisierungsfehler;
- Anwendung eines Ausgleichs 1. Ordnung (Glättung) oder Anwendung eines Ausgleichs höherer Ordnung bei Erfordernis;

Schritt 4 im ersten Rechnerteil 60 "Bereichsauswahl im Histogramm",

- Festlegung der Grenzen durch die Anzahl N zusammenhängender Speicherkanaladressen für die Minimumsuche;
- analoge Festlegung für eine eventuelle Maximumsuche;

Schritt 5 im ersten Rechnerteil 60 "Minimumsuche",

- Ermittlung des Minimums anhand entsprechender Algorithmen durch gegenseitigen Vergleich der Signalwerte in den N-Kanälen;

Schritt 6 im ersten Rechnerteil 60 "Prüfung und Entscheidung",

- Prüfung des ermittelten Minimums, ob relativ oder absolut;
- Anwendung der Entscheidungskriterien beim Auftreten relativer Minima;
- analoge Anwendung für eine eventuelle Maximumsuche;
- werden keine Minima gefunden, wird das Histogramm auf analytische Relevanz, beispielsweise auf den hämatologischen Aussagewert oder auf apparative Fehler, überprüft;

Schritt 7 im zweiten Rechnerteil 70 "Verwendung des Minimums",

- Bildung der Integrale (Zählung) beidseitig des Minimums (Trennschwelle);
- Resultatausgabe;
- Initialisierung einer neuen Messung mittels Steuersignalen, die mit Hilfe des Kennwertes des ermittelten Kanals gebildet werden;
- Abgabe von Steuersignalen an zugeschaltete Apparate (bei automatischer Probenverarbeitung, beispielsweise Verdünnungsänderung);
- Anweisung an den Benutzer.

Die vorstehend beschriebenen und für die Blutkörperchenanalyse erforderlichen Schritte sind im wesentlichen aus der eingangs beschriebenen Anordnung zur Klassierung von in einer Blutprobe enthaltenen Teilchen gemäss der EP-A 0 012 418 bekannt. Diese Anordnung gewährleistet bei entsprechender Verteilung der Teilchengrössen ein selbsttätiges (adaptives) Aufsuchen von Schwellenwerten zur Unterscheidung sich überlappender Populationen, welche Populationen Maxima und Minima aufweisen.

Bei der Analyse einer Probe, beispielsweise bei einer Blutprobe mit relativ geringer Lymphozyten-Konzentration, können die zur Differenzierung erforderlichen und auf die Maxima bezogenen Minima nicht ausreichend genug ausgeprägt sein, so dass ein Bestimmen der Lymphozyten (LYC) mittels Trennschwellen gemäss der EP-A 0 012 418 zu keinem exakten, verwendbaren Ergebnis führt.

Für eine Optimierung der bekannten, vorstehend im wesentlichen anhand der Schritte 1 bis 7 beschriebenen Teilchenanalyse-Anordnung werden zur Bildung einer verwendbaren Trennschwelle bei nicht ausreichend genug ausgeprägten Minima gemäss vorliegender Erfindung weitere, nachstehend im einzelnen aufgeführte Verfahrensschritte 8-15 angegeben, welche in nachstehend beschriebener Weise und Reihenfolge ablaufen:

Schritt 8 im dritten Rechnerteil 80 "Differenzquotienten-Berechnung",

- Berechnung von Differenzenquotienten Q für jedes einzelne Histogramm aus dessen eruierbaren Minima und Maxima;

- Bestimmung einer Reihe aller möglichen Differenzenquotienten Q;

Schritt 9 im zweiten Speicher 85 "Speicherung der Differenzquotienten Q",

- Ordnen der Differenzenquotienten Q;
- Abspeichern der Differenzenquotienten Q;
- Mittelwertbildung der auf bestimmte Problemschwellen bezogenen Differenzenquotienten Q;

Schritt 10 im dritten Rechnerteil 80 "Selektion der Differenzenquotienten",

- Festlegung der Kriterien für die zu bestimmende Problemschwelle;
- Auswahl der entsprechenden Differenzenquotienten Q für die festzulegende Problemschwelle;

Schritt 11 im dritten Rechnerteil 80 "Prüfung und Entscheidung",

- Prüfung auf Vorliegen der Differenzenquotienten Q;
- Durchführung des nächsten Schrittes (12), sofern für die zu bestimmende Problemschwelle $S_x$ ein x-ter Differenzenquotient $Q_x$ vorliegt;
- Speicherung des Histogrammes (Schritt 14); sofern kein x-ter Differenzquotient $Q_x$ vorhanden (Möglichkeit besteht zu Beginn einer Messreihe);

Schritt 12 im vierten Rechnerteil 90 "Berechnung der Problemschwelle",

- Berechnung der Problemschwellen unter Verwendung des Differenzenquotienten Q, eines ausgeprägten Minimums und eines ausgeprägten Maximums;

Schritt 13 im vierten Rechnerteil 90 "Prüfung und Entscheidung",

- Prüfung der (nach Schritt 12) berechneten Problemschwellen auf Randbedingungen, dass heisst, jede einzelne Problemschwelle muss in einem bestimmten Volumenbereich liegen;
- Verwendung der einzelnen Problemschwellen bei Schritt 7 zur Parameterberechnung, sofern Bedingungen erfüllt;
- keine Verwendung bei Nichterfüllung der Bedingung (weitere Erläuterung bei Schritt 15);

Schritt 14 im dritten Speicher 95 "Speicherung von Histogrammen",

- Speicherung der Histogramme, für welche keiner der erforderlichen Differenzenquotienten Q vorliegt;
- Verwendung zu einem späteren Zeitpunkt, beim Vorliegen eines entsprechenden Differenzenquotienten Q gemäss der Schrittschleife 10,11,12,13 und 7;

Schritt 15 im zweiten Rechnerteil 70 "Ermittlung nicht unterteilbarer Histogramme",

- wird nach mehrfachem Durchlaufen der durch die Schritte 14,10 und 11 gebildeten Schleife keine Problemschwelle gefunden, so kann das Problem der Trennung für das vorliegende Histogramm nicht gelöst werden;
- erfüllen die nach Schritt 13 zu prüfenden Problemschwellen die Randbedingungen nicht, so kann das Problem der Trennung für das vorliegende Histogramm nicht gelöst werden;
- entsprechende Anweisung an den Benutzer oder an ein entsprechend ausgebildetes, nicht dargestelltes Gerät.

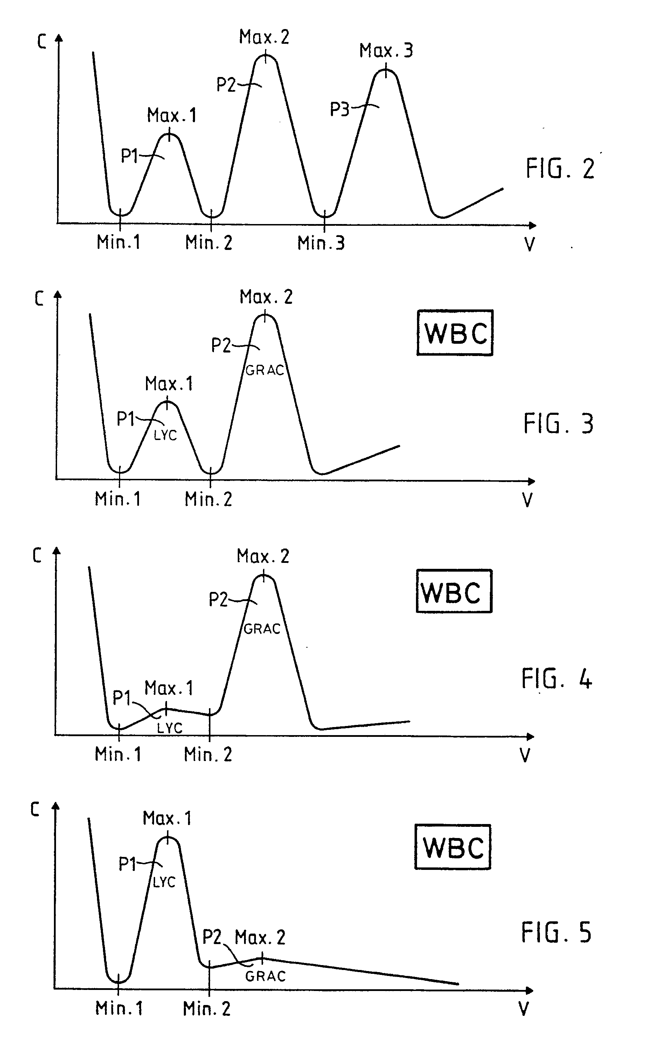

Die Figuren 2,3,4 und 5 zeigen schematisch dargestellte Histogramme mit unterschiedlich ausgeprägten Populationen oder Verteilungen. In der jeweiligen Verteilungskurve geben die Werte der Ordinate die relative Zählhäufigkeit (Counts C) der Teilchen und die Werte der Abszisse den Spitzenwert der bei der Teilchenanalyse anhand der abgetasteten Teilchen erzeugten Impulsspannung (Signale) an, was dem Teilchenvolumen V entspricht.

Fig. 2 zeigt ein allgemeines Histogramm der Teilchenanalyse mit beispielsweise drei mit P1, P2 und P3 bezeichneten Populationen und mit Max.1, Max.2 und Max.3 bezeichneten Maxima sowie mit Min.1, Min.2 und Min.3 bezeichneten Minima.

Fig. 3 zeigt ein WBC-Histogramm für die Analyse weisser Blutkörperchen (WBC = white blood cells) mit zwei mit P1 und P2 bezeichneten Populationen und mit Max.1 und Max.2 bezeichneten Maxima sowie mit Min.1 und Min.2 bezeichneten Minima.

Wie der in Fig. 3 am Beispiel des WBC-Histogramms dargestellte Kurvenverlauf zeigt, liegen die Granulozyten (GRAC) und Lymphozyten (LYC) zueinander in verschiedenen, gut ausgeprägten Wertbereichen, so dass die Bestimmung von Konzentrationen durch Setzen von Trennschwellen anhand der bekannten Methode (Schritt 1-7) ohne weiteres möglich ist. Bei dem WBC-Histogramm gemäss Fig. 4 hingegen ist der Kurvenverlauf aufgrund relativ geringer Lymphozyten-Konzentration und bei dem WBC-Histogramm gemäss Fig 5 aufgrund relativ geringer Granulozyten-Konzentrationweniger gut ausgeprägt und demzufolge die Bestimmung der Lymphozyten- beziehungsweise Granulozyten-Konzentration mit den Schritten 1-7 nicht mehr möglich.

Fig. 4 zeigt als ausgewähltes Beispiel ein WBC-Histogramm für die Blutkörperchenanalyse mit nur einer deutlich ausgeprägten Population P2 mit einem Maximum Max.2, wobei bei diesem Histogramm eine mit P1 bezeichnete Population mit dem mit Max.1 bezeichneten Maximum in bezug auf die beiden Minima Min.1 sowie Min.2 weniger deutlich, das heisst für die weitere Verarbeitung nicht ausreichend genug, ausgeprägt ist. Derartige, nicht positiv unterscheidbare Histogramme, das heisst Histogramme mit nicht ausreichend genug ausgeprägten Trennschwellen, werden nunmehr zur Bestimmung einer problemschwelle S einem neuen, erweiterten Algorithmus unterworfen.

Die rechnerische Bestimmung des Differenzenquotienten (vergl. Schritt 8) für das als Beispiel in Fig. 3 dargestellte WBC-Histogramm erfolgt nach einer Gleichung I

$$Q_2(1,2) = \frac{Min.(2) - Min.(1)}{Max.(2) - Min.(1)} \qquad (I)$$

und anhand dieses berechneten Differenzenquotienten $Q_2(1,2)$ ist nunmehr die Problemschwelle (vergl. Schritt 12) für das in Fig. 4 dargestellte WBC-Histogramm nach einer Gleichung II

$$S_2(1,2) = (Max.(2) - Min.(1)) \cdot Q_2(1,2) + Min.(1) \qquad (II)$$

bestimmbar.

Fig. 5 zeigt ein weiteres, ausgewähltes WBC-Histogramm für die Blutkörperchenanalyse mit deutlich ausgeprägter Population P1, mit einem Maximum Max.1 und einem Minimum Min.1, wobei bei diesem Histogramm die Population P2 mit dem Maximum Max.2 in bezug auf das Minimum Min.2 weniger deutlich ausgeprägt ist. Der Algorithmus (Gleichungen I/II) zur Bestimmung eines Differenzenquotienten sowie einer Problemschwelle ist hierbei entsprechend anwendbar.

Das Verfahren ist in spezieller Verwendung in der Regel auf eine bestimmte Problemschwelle ausgelegt, wie sie beispielsweise im WBC-Histogramm von Fig. 4 oder 5 als Min.2 gezeigt ist. In einer Analyse einer Probenserie von WBC-Messungen mit bekannten Methoden sind also Blutproben mit einer genügend hohen Lymphozytenzahl bzw. genügend hohen WBC-Werten, aber auch solche, bei denen die Lymphozytenauswertung unmöglich ist, enthalten. Das Ziel ist es nun, die Zahl der bezüglich Lymphozyten auswertbaren Proben markant zu erhöhen.

Die Analyse einer grösseren Anzahl von WBC-Histogrammen gemäss dem vorgeschlagenen Verfahren ergab für den Differenzenquotienten gemäss Gleichung I in guter Approximation den beispielsweisen Wert von 0,59 plus minus 0,04.

In Verallgemeinerung der Gleichungen I und II gilt, dass

a) die rechnerische Bestimmung eines Differenzenquotienten Q für den allgemeinen Fall eines nicht dargestellten Histogramms nach einer Gleichung I'

$$Q_x(j,k) = \frac{Min.(x) - Min.(j)}{Max.(k) - Min.(j)} \qquad (I')$$

erfolgen kann, wobei in dieser Gleichung

mit $Q_x(j,k)$  ein x-ter Differenzenquotient, der mit ausreichend ausgeprägtem Min.x, Min.(j) sowie Max.(k) gebildet wurde;

mit x  ein Index zum Minimum der aufzusuchenden Problemschwelle;

6

mit j ein Index zu einem ausgeprägten Minimum, welches insbesondere durch ein selbsttätiges, adaptives Aufsuchen ermittelbar und somit keine Problemschwelle ist; und

mit k ein Index zum Maximum, welches gut ausgeprägt und bestimmbar ist,

bezeichnet ist,

und dass

b) die rechnerische Bestimmung einer sogenannten Problemschwelle S somit nach einer Gleichung II′

$$S_x(j,k) = (Max.(k) - Min.(j)) \cdot Q_x(j,k) + Min.(j) \qquad (II')$$

erfolgen kann, wobei in dieser Gleichung

mit $S_x(j,k)$ eine unter Berücksichtigung von Max.(k) und Min.(j) berechnete x-te Schwelle, die dem gesuchten Min.(x) entspricht,

bezeichnet ist.

Bei einer Probenserie wird daher von jeder Probe ein Histogramm erstellt. In diesem Histogramm werden die Populationen mittels Schwellenkriterien bestimmt und nun neu gleich alle möglichen Differenzenquotienten zusammengestellt. Bei Proben mit einer Problemschwelle wird diese mit Hilfe der bereits erfassten Differenzenquotienten errechnet. Fehlt ein entsprechender Differenzenquotient vorläufig noch, so wird das Histogramm abgespeichert, und die Schwelle wird später, wenn ein entsprechender Differenzenquotient vorliegt, berechnet. Je mehr auf üblichem Weg bestimmbare Extremstellen erfasst werden, umso genauer werden die Grundlagen zur Berechnung der Differenzenquotienten und damit der errechenbaren Schwellen.

Bei einem anhand einer Vielzahl von WBC-Histogrammen durchgeführten Analysenprogramm wurde festgestellt, dass die mittels der Gleichung I beziehungsweise I′ jeweils berechneten und entsprechend festgehaltenen Differenzenquotienten der gleichen Klasse (Typen) einen weitgehend konstanten Wert mit nur geringen, vernachlässigbaren Abweichungen aufweisen. Versuche haben ergeben, dass ein, wie vorstehend im wesentlichen im Verfahrensschritt 8 und 9 beschrieben, entsprechend gemittelter Differenzenquotient $\overline{Q}_2$ oder $\overline{Q}_X$ in guter Approximation ausreichend invariant ist, so dass die rechnerische Bestimmung der Problemschwelle $S_2$ oder $S_x$ gemäss der Gleichung II oder II′ vorzugsweise mit einem gemittelten Differenzenquotienten $\overline{Q}_2$ oder $\overline{Q}_X$ bestimmt wird.

Derartig gemittelte Differenzenquotienten sind mit geeigneten Mitteln vorzugsweise zu archivieren und können für gleiche Analysen (beispielsweise bei WBC-Messungen) an den bestimmbaren Problemschwellen jeweils verifiziert und adaptiv optimiert wieder verwendet werden. Auf diese Weise können verbindliche, sogenannte Schwellen-Standards geschaffen werden.

Die Erfahrung zeigt, dass die Schwellenberechnungen besondere Randbedingungen erfüllen sollen. Falls beispielsweise mit der verwendeten bekannten Bestimmungsmethode bei einer WBC-Messung die Problemschwelle Min.2 nicht bestimmbar ist, soll komplementär das erfinderische Verfahren angewendet werden, aber nur, falls z. B. gilt: 40 fl < Min.1 < 120 fl und 140 fl < Max.2 < 220 fl (fl = femtoliter). Andernfalls auf eine Lymphozytenbestimmung überhaupt verzichtet. Diese Volumina von 40 - 220 fl liegen innerhalb eines Histogramms für weisse Blutkörperchen. Sollen Problemschwellen anderer Partikelpopulationen als weisser Blutkörperchen ermittelt werden, gelten natürlich andere Randbedingungen.

Trotz wesentlicher Erweiterung der Möglichkeiten zur Bestimmung von Problemschwellen kann es also vorkommen, dass einzelne Histogramme nicht automatisch auswertbar sind, sei es, dass kein statistisch genügend abgesicherter Wert eines entsprechenden Differenzenquotienten $Q_x$ vorliegt, sei es, dass die erforderlichen Randbedingungen nicht eingehalten sind, z. B. weil die zugrunde gelegten Extrema Min.(j) und Max.(k) fehlerbehaftet sind oder nicht im erwarteten Intervall liegen. In diesen Fällen wird das Histogramm ebenfalls gespeichert und für eine Ueberprüfung oder Auswertung nach anderen Methoden zur Verfügung gehalten, wofür eine Anweisung an den Benutzer oder ein entsprechendes Gerät ausgegeben wird.

Das erfindungsgemässe Verfahren sowie die Vorrichtung zur Durchführung des Verfahrens sind einerseits eigenständig funktionsfähig und können andererseits komplementär in das Verfahren und in die zugehörige Einrichtung gemäss der EP-A 0 012 418 integriert werden, so dass hiermit weitgehend sämtliche Partikelpopulations-Kenngrössen - Differenzquotienten $Q_x(j,k)$ sowie Problemschwellen $S_x(j,k)$ - rechnerisch nachvollziehbar sind und mit den dabei ermittelten Werten entsprechende Dateien erstellt, überprüft, verifiziert und optimiert werden können.

An dieser Stelle sei darauf hingewiesen, dass der Wert der errechneten Problemschwelle in an sich bekannter Weise als vorrichtungsinternes, elektrisches Signal verarbeitet und einem nicht dargestellten Gerät zum Steuern von Ausgabeeinheiten zugeführt wird.

## Patentansprüche

1. Verfahren zum Bestimmen von Schwellenwerten bei der Teilchenanalyse einer Flüssigkeitsprobe, insbesondere einer Blutprobenflüssigkeit, auf Grundlage ermittelter und zu einem Histogramm geordneter Messwerte, wobei das Histogramm mindestens zwei im wesentlichen aus Maxima und Minima gebildete Populationen aufweist, wovon mindestens ein Minimum adaptiv ermittelbar ist, gekennzeichnet durch folgende Schritte:

a) Berechnung mindestens eines Differenzenquotienten (Q) für jedes Histogramm, unter Verwendung entsprechender Minima und Maxima;

b) Ordnen, Abspeichern und Bilden von Mittelwerten des/der auf bestimmte Problemschwellen bezogenen Differenzenquotienten (Q);

c) Auswahl des/der Differenzenquotienten (Q) für die festzulegende Problemschwelle;

d) Prüfen auf Vorliegen des/der Differenzenquotienten (Q) und bei Nichtvorliegen des/der Differenzenquotienten Speicherung des Histogramms;

e) Berechnung der Problemschwellen auf Grundlage der Minima und Maxima sowie der berechneten Differenzenquotienten und Prüfung der berechneten Problemschwellen auf Randbedingungen sowie Verwendung der einzelnen Problemschwellen zur Parameterbestimmung;

f) Speicherung der Histogramme, für die kein Differenzenquotient berechnet werden konnte; und

g) Ermittlung nicht trennbarer Histogramme mit Problemschwellen und Anweisung an einen Benutzer oder an ein entsprechend ausgebildetes Gerät.

2. Verfahren nach Anspruch 1, dadurch gekennzeichnet, dass die rechnerische Bestimmung eines Differenzenquotienten ($Q_x$) für ein allgemeines Histogramm nach der folgenden Gleichung I' durchgeführt wird:

$$Q_x(j,k) = \frac{Min.(x) - Min.(j)}{Max.(k) - Min.(j)}$$

3. Verfahren nach Anspruch 2, dadurch gekennzeichnet, dass die rechnerische Bestimmung einer Problemschwelle ($S_x$) für das allgemeine Histogramm nach der folgenden Gleichung II' durchgeführt wird:

$S_x(j,k) = (Max.(k) - Min.(j)) \bullet Q_x(j,k) + Min.(j)$

wobei x ein Index zum Minimum der gesuchten Problemschwelle ist, wobei j ein Index zu dem durch selbsttätiges, adaptives Aufsuchen ermittelten Minimum ist und k ein Index zum ausgeprägten Maximum darstellt.

4. Verfahren nach Anspruch 3, dadurch gekennzeichnet, dass aus einer Reihe von Differenzenquotienten gleicher Klasse ein gemittelter Differenzenquotient ($\bar{Q}_x$) gebildet und zur rechnerischen Bestimmung der Problemschwelle ($S_x$) gemäss der Gleichung II' verwendet wird.

5. Verfahren nach Anspruch 4, dadurch gekennzeichnet, dass die gemittelten Differenzenquotienten ($\bar{Q}_x$) archiviert und an bestimmbaren Problemschwellen ($S_x$) verifiziert und adaptiv optimiert werden.

6. Vorrichtung (100) zur Durchführung des Verfahrens gemäss Anspruch 1, welche Vorrichtung versehen ist mit:

- einem ersten Speicher (50) zur Organisation durch Abschätzen sowie Definition einer Teilchengrösse zu einem Speicherkanal und zur Speicherung durch Zeiterfassung und Digitalisierung von Signalen sowie zur Zuordnung und Bestimmung einer dem digitalisierten Teilchensignal entsprechenden Speicherkanaladresse;

- einem ersten Rechnerteil (60) zur Aufbereitung der Signalmenge durch Minderung von Quantisierungsfehlern, durch Anwendung eines Ausgleichs 1. oder höherer Ordnung und zur Bereichsauswahl im Histogramm durch Festlegung von Speicherkanaladressen für eine Minimum- oder Maximumsuche sowie zur Prüfung des ermittelten Minimums oder Maximums;

- einem zweiten Rechnerteil (70) zur Verwendung des Minimums durch Bildung der Integrale, Initialisierung einer neuen Messung und Abgabe von Steuersignalen an zugeschaltete Teilchenanalysegeräte, dadurch gekennzeichnet, dass die Vorrichtung (100) weiterhin folgende Teile umfasst:
  - einen dritten Rechnerteil (80) mit Mitteln für die Berechnung eines oder einer Reihe von Differenzenquotienten ($Q_x(j,k)$), ferner mit Mitteln für die Auswahl von Differenzenquotienten für eine festzulegende Problemschwelle und weiterhin mit Mitteln zur Prüfung auf Vorliegen von Differenzenquotienten und Speicherung des Histogramms, sofern kein Differenzenquotient vorhanden ist;
  - einen zweiten Speicher (85), benutzt für das Ordnen, Abspeichern und Bilden von Mittelwerten von auf bestimmte Problemschwellen bezogenen Differenzenquotienten;
  - einen vierten Rechnerteil (90) mit Mitteln für die Berechnung einer oder einer Reihe von Problemschwellen ($S_x(j,k)$),ferner mit Mitteln für die Prüfung berechneter, zur Parameterberechnung erforderlicher Problemschwellen auf Randbedingungen;
  - einen dritten Speicher (95) mit Mitteln für die Speicherung von Histogrammen, für die kein Differenzenquotient ($Q_x(j,k)$) vorliegt, und weitern Mitteln für die Verwendung zu einem späteren Zeitpunkt, nachdem eine entsprechende Schrittschleife durchlaufen ist.

7. Vorrichtung nach Anspruch 6, dadurch gekennzeichnet, dass der zweite Rechnerteil (70) Mittel aufweist, mittels welchen ein der entsprechenden Problemschwelle ($S_x(j,k)$) entsprechendes elektrisches Signal zum Steuern einer Ausgabeeinheit in an sich bekannter Weise verarbeitbar ist.

**Claims**

1. A method for determining threshold values in particle analysis of a liquid sample, in particular a blood sample liquid, on the basis of determined measured values, ordered in a histogram, wherein the histogram has at least two populations formed substantially from maxima and minima, at least one minimum of which is able to be determined adaptively, characterised by the following steps:

   a) calculation of at least one difference quotient for each histogram by using corresponding minima and maxima;

   b) arranging, storing and forming average values of the different quotient or quotients, relative to the determined problem thresholds;

   c) selection of the different quotient/s for the problem threshold to be determined;

   d) testing for the presence of difference quotient/s (Q) and, with absence of the difference quotient/s, storage of the histogram;

   e) calculation of the problem thresholds on the basis of the minima and maxima as well as the calculated difference quotients and testing of the calculated problem thresholds for boundary conditions as well as use of the individual problem thresholds for parameter calculation;

   f) storage of the histograms for which no difference quotient could be calculated; and

   g) determining of non-separable histograms with problems thresholds and instruction to user or a correspondingly constructed apparatus.

2. A method according to claim 1, characterised in that the calculated determining of a difference quotient ($Q_x$) for a general histogram is able to be carried out according to the following equation I':

$$Q_x(j,k) = \frac{Min.(x) - Min.(j)}{Max.(k) - Min.(j)}$$

3. A method according to claim 2, characterised in that the calculated determining of a problem threshold ($S_x$) for the general histogram is carried out according to the following equation II':

$$S_x(j,k) = (Max.(k) - Min.(j)) \cdot Q_x(j,k) + Min.(j)$$

wherein x is an index for the minimum of the problem threshold sought, wherein j is an index for the minimum determined by the automatic adaptive searching and k is an index for marked maximum.

4. A method according to claim 3, characterised in that from one series of difference quotients of the same class an average difference quotient $(Q_x)$ is formed and used for calculated determining of the problem threshold $(S_x)$ according to equation II'.

5. A method according to claim 4, characterised in that the average difference quotient $(Q_x)$ is recorded and verified to determinable problem thresholds $(S_x)$ and optimised adaptively.

6. A device (100) for carrying out the method according to claim 1, which device is provided with:
   - a first memory (50) for organising by evaluation as well as definition of a particle size to a memory channel and for storing by time detection and digitising signals as well as allocation and determining a storage channel address corresponding to the digitised particle signal;
   - a first computer part (60) for processing the signal quantity by reducing the quantization errors, by using an adjustment of 1st or higher order for range selection in the histogram by establishing storage channel addresses for a minimum or maximum search as well as examining the determined minimum or maximum;
   - a second computer part (70) for using the minimum by formation of integrals, initiating a new measurement and delivery of control signals to connected particle analysis apparatus, characterised in that the device (100) comprises furthermore the following parts:
   - a third computer part (80) with means for calculating one or a series of difference quotients $(Q_x(j,k))$, furthermore means for the selection of difference quotients for a problem threshold to be determined and furthermore with means for examining the presence of difference quotients and storage of the histogram, as long as no difference quotient is present;
   - a second storage (85), used for arranging, storing and forming average values of difference quotients relative to determined problem thresholds;
   - a fourth computer part (90) with means for the calculation of one or a series of problem thresholds $(S_x(j,k))$, furthermore with means for examining calculated problem thresholds required for parameter calculation for boundary conditions:
   - a third memory (95) with means for the storage of histograms, for which no difference quotient $(Q_x(j,k))$ is present and further means for the use at a later point in time, after a corresponding sequence loop is run through.

7. A device according to claim 6, characterised in that the second computer part (70) has means, by means of which a corresponding electric signal for controlling an issue unit corresponding to the corresponding problem threshold $(S_x(j,k))$, is able to be processed in a known manner.

**Revendications**

1. Procédé pour déterminer les valeurs de seuil lors de l'analyse des particules d'un échantillon liquide, notamment d'un échantillon de liquide sanguin sur la base des grandeurs de mesure déterminées et associées à un histogramme, l'histogramme ayant au moins deux populations formées de maxima et de minima parmi lesquels au moins un minimum se détermine de manière adaptative, procédé caractérisé en ce que :
   a) on calcule au moins un quotient de différences (Q) pour chaque histogramme en utilisant des minima et des maxima correspondants,
   b) on ordonne, enregistre en mémoire et forme des valeurs moyennes du ou des quotients des différences (Q), rapportés à des seuils délicats déterminés,
   c) on choisit le/les quotients des différences (Q) pour fixer le seuil délicat,
   d) on contrôle la présence du/des quotients de différences (Q) et en l'absence du/des quotient des différences, on met l'histogramme en mémoire,
   e) on calcule les seuils délicats sur la base des minima et maxima ainsi que des coefficients de différences calculés et on vérifie les seuils délicats calculés quant aux conditions limites et à l'utilisation des différents seuils délicats pour le calcul des paramètres,
   f) on inscrit en mémoire l'histogramme pour lequel on n'a pas pu calculer de quotients des différences et
   g) on détermine des histogrammes non subdivisibles avec des seuils délicats et on l'indique à un utilisateur ou à l'appareil correspondant.

2. Procédé selon la revendication 1, caractérisé en ce qu'on détermine par le calcul un coefficient de différences ($Q_x$) pour un histogramme général selon l'équation (I) suivante :

$$Q_x(j,k) \quad \frac{Min.(x) - Min.(j)}{Max.(k) - Min.(j)}$$

3. Procédé selon la revendication 2, caractérisé en ce qu'on détermine par le calcul un seuil délicat ($S_x$) pour l'histogramme général selon l'équation (II) suivante :

$S_x(j,k) = (Max.(k) - Min.(j)) \cdot Q_x(j,k) + Min.(j)$

équation dans laquelle x est un indice du minimum correspondant au seuil délicat recherché, j est un indice du minimum obtenu de manière automatique par recherche adaptative et k est l'indice d'un maximum accentué.

4. Procédé selon la revendication 3, caractérisé en ce qu'à partir d'une série de quotients des différences d'une même classe, on forme un quotient moyen des différence ($\overline{Q}_x$) et on l'utilise pour déterminer par le calcul, le seuil délicats ($S_x$) selon l'équation (II').

5. Procédé selon la revendication 4, caractérisé en ce qu'on archive les quotients des différences moyens ($\overline{Q}_x$) et on les vérifie sur certains seuils déterminés et on les optimise par adaptation.

6. Dispositif (100) pour la mise en oeuvre du procédé selon la revendication 1, comprenant :
    - une première mémoire (50) pour l'organisation par évacuation et la définition d'une dimension de particules pour un canal de mémoire et pour mettre en mémoire par détection dans le temps et numérisation de signaux ainsi qu'association et détermination d'une adresse de canal de mémoire correspondant à un signal à particules numérisé ;
    - une première partie de calculateur (60) pour préparer l'ensemble des signaux par réduction des erreurs de quantification et application d'une compensation de premier ordre ou d'ordre supérieur et sélection de plages dans l'histogramme pour déterminer des adresses de canal de mémoire pour une recherche de minimum ou de maximum ainsi que contrôle du minimum ou du maximum obtenu,
    - une seconde partie de calculateur (70) pour l'application du minimum en formant les intégrales, initialisation d'une nouvelle mesure et émission de signaux de commande vers des appareils d'analyse de particules mis en oeuvre,
    dispositif (100) caractérisé en ce qu'il comprend les éléments suivants :
    - une troisième partie de calculateur (80) avec des moyens pour calculer un ou une série de quotients des différences ($Q_x(j,k)$, avec des moyens pour sélectionner des quotients des différences pour un seuil délicat à fixer et en outre des moyens pour contrôler la présence de quotients de différences et mettre en mémoire l'histogramme dans la mesure où il n'y a pas de quotients de différences,
    - une seconde mémoire (85) utilisée pour ordonner, inscrire en mémoire et former des valeurs moyennes des quotients des différences concernant des seuils délicats, déterminés,
    - une quatrième partie de calculateur (90) avec des moyens pour calculer un ou une série de seuils délicats ($S_x(j,k)$ avec des moyens pour contrôler les conditions limites relatives aux seuils délicats nécessaires pour le calcul des paramètres,
    - une troisième mémoire (95) avec des moyens pour inscrire des histogrammes, pour lesquels il n'y a pas de quotients des différences ($Q_x(j,k)$ et des moyens destinés à être utilisés ultérieurement, après l'exécution d'une boucle d'étapes correspondante.

7. Dispositif selon la revendication 6, caractérisé en ce que la seconde partie de calculateur (70) comprend des moyens pour traiter de manière connue en soi un signal électrique correspondant à un seuil délicat ($S_x(j,k)$ pour commander une unité d'émission.

FIG. 1

FIG. 2

WBC

FIG. 3

WBC

FIG. 4

WBC

FIG. 5